# EUROPEAN PATENT SPECIFICATION

(11) **EP 4 270 610 B1**
(45) Date of publication and mention of the grant of the patent: **22.04.2026**
(21) Application number: 21911354.5
(22) Date of filing: 10.12.2021
(51) Int. Cl.: H01M 50/105, H01M 50/131, H01M 10/04, H01M 50/166

(54) **SECONDARY BATTERY POUCH, MANUFACTURING METHOD THEREOF, AND SECONDARY BATTERY MANUFACTURING METHOD**
SEKUNDÄRBATTERIEBEUTEL, HERSTELLUNGSVERFAHREN DAFÜR UND SEKUNDÄRBATTERIEHERSTELLUNGSVERFAHREN
POCHE DE BATTERIE SECONDAIRE, SON PROCÉDÉ DE FABRICATION ET PROCÉDÉ DE FABRICATION DE BATTERIE SECONDAIRE

(30) Priority: 23.12.2020 KR 20200182647; 08.12.2021 KR 20210174922
(43) Date of publication of application: 01.11.2023
(73) Proprietor: LG Energy Solution, Ltd., Seoul 07335 (KR)
(72) Inventor: HONG, Jeong Woo, Daejeon 34122 (KR); LEE, Chung Hee, Daejeon 34122 (KR); PARK, Sin Young, Daejeon 34122 (KR); PARK, Dong Hyeuk, Daejeon 34122 (KR)
(74) Representative: Goddar, Heinz J.
(86) International application number: PCT/KR2021/018805
(87) International publication number: WO 2022/139287

(56) References cited:
- KR-A- 20140 132 528
- KR-A- 20190 024 755
- KR-A- 20190 024 755
- KR-A- 20190 038 094
- KR-A- 20190 038 094
- KR-A- 20200 025 909
- KR-A- 20200 025 909
- KR-B1- 100 571 269

## Description

### CROSS-REFERENCE TO RELATED APPLICATION

### TECHNICAL FIELD

The present invention relates to a pouch for a secondary battery, a method for manufacturing the same, and a method for manufacturing a secondary battery, and more particularly, to a pouch for a secondary battery, in which curling such as being rolled or bent is prevented, a method for manufacturing the same, and a method for a secondary battery.

### BACKGROUND ART

KR 2019 0038094 A relates to a pouch forming apparatus for a secondary battery. KR 2020 0025909 A relates to a pouch, a secondary battery comprising the same, and a method for manufacturing the secondary battery. KR 2019 0024755 A relates to a secondary battery, a manufacturing method thereof, and a pressure block for manufacturing a secondary battery.

In general, secondary batteries refer to chargeable and dischargeable batteries, unlike primary batteries that are not chargeable. The secondary batteries are being widely used in the high-tech electronic fields such as mobile phones, notebook computers, and camcorders.

Also, such a secondary battery is classified into a can type secondary battery in which an electrode assembly is built in a metal can and a pouch type secondary battery in which an electrode assembly is built in a pouch. The pouch type secondary battery comprises an electrode assembly, an electrolyte, and a pouch accommodating the electrode assembly and the electrolyte.

In addition, in the electrode assembly, a positive electrode and a negative electrode are disposed with a separator therebetween, a positive electrode tab is provided on the positive electrode, and a negative electrode tab is provided on the negative electrode. In addition, an electrode lead is coupled to each of the positive electrode tab and the negative electrode tab.

In addition, the pouch comprises an accommodation part accommodating the electrode assembly, a gas collection part collecting a gas generated in the accommodation part, and a sealing part sealing the accommodation part and the gas collection part.

However, in the case of the pouch, there is a problem in that, during a forming process for forming the accommodating part, a curl phenomenon, in which a region excluding the accommodating part, that is, a region of the gas pocket part is curled or bent due to residual stress, occurs. Particularly, due to the curl phenomenon occurring in the pouch, an interference occurring during the process of manufacturing the secondary battery, there are problems, in which sealing defects occur, and an equipment operation is deteriorated.

### DISCLOSURE OF THE INVENTION

### TECHNICAL PROBLEM

An object of the prevent invention for solving the above problems is to provide a pouch for a secondary battery, which comprises a reinforcing part that reinforces strength of a region, in which a gas pocket part is formed, to prevent a curl phenomenon, in which the region, in which the gas pocket part is formed, is curled or bent, from occurring, and accordingly, to prevent sealing defects and deterioration of an equipment operation from occurring, a method for manufacturing the same, and a method for manufacturing a secondary battery.

### TECHNICAL SOLUTION

A pouch for a secondary battery is provided according to claim 1. Embodiments are set out in claims 2 - 6.

A method for manufacturing a pouch for a secondary battery according to the present invention is set out in claim 7.

Embodiments are set out in claims 8 - 10.

A method for manufacturing a secondary battery according to the present invention is set out in claim 11.

### ADVANTAGEOUS EFFECTS

The pouch for the secondary battery according to the present invention may comprise the reinforcing part to prevent the curl phenomenon, in which the region excluding the region, in which the accommodation groove is formed, in the pouch is curled or bent, from occurring, and accordingly, to prevent the sealing defects and the deterioration of the equipment operation from occurring.

### BRIEF DESCRIPTION OF THE DRAWINGS

FIG. 1 is a perspective view illustrating a state in which a pouch for a secondary battery is spread out according to a first embodiment of the present invention.
FIG. 2 is a side view of FIG. 1.
FIG. 3 is a cross-sectional view taken along line A-A of FIG. 1.
FIG. 4 is a perspective view illustrating a state in which the pouch for the secondary battery is assembled according to the first embodiment of the present invention.
FIG. 5 is a side view of FIG. 4.
FIG. 6 is a cross-sectional view taken along line B-B of FIG. 5.
FIG. 7 is a flowchart illustrating a method for manufacturing the pouch for the secondary battery according to the first embodiment of the present invention.
FIG. 8 is a perspective view illustrating a process of preparing a pouch.
FIG. 9 is a perspective view illustrating a process of forming an accommodation groove and a reinforcing part.
FIG. 10 is a perspective view illustrating a process of folding the pouch.
FIG. 11 is a flowchart illustrating a method for manufacturing the second battery according to the second embodiment of the present invention.
FIG. 12 is a perspective view illustrating a process of manufacturing the pouch.
FIG. 13 is a perspective view illustrating a process of removing the pouch.
FIG. 14 is a cross-sectional view illustrating a process of accommodating an electrode assembly.
FIG. 15 is a plan view illustrating a process of sealing the pouch.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Pouch for secondary battery according to first embodiment of the present invention]

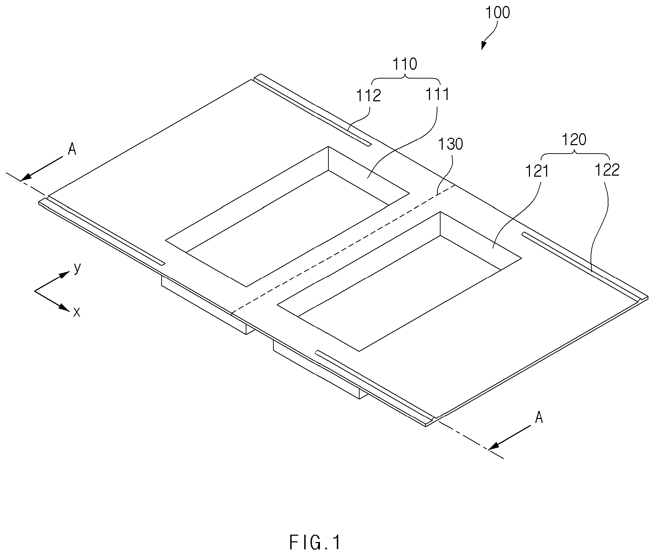

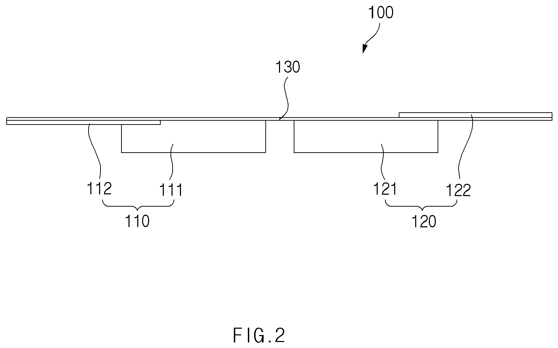

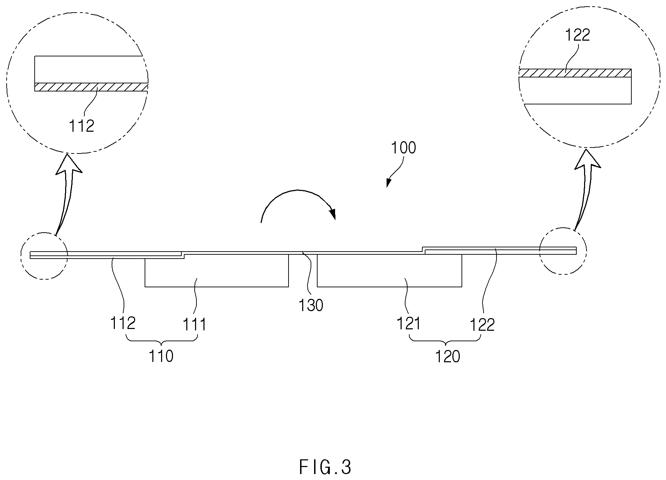

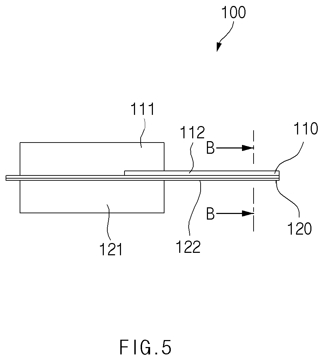

A pouch 100 for a secondary battery according to a first embodiment of the present invention is configured to accommodate an electrode assembly as illustrated in FIGS. 1 to 6 and has a structure, in which one pouch 100 in a longitudinal direction (a left and right direction when viewed in FIG. 2) and the other pouch 120 are formed to correspond to each other. In addition, the one pouch 110 and the other pouch 120 are integrally connected to each other with respect to a boundary line 130.

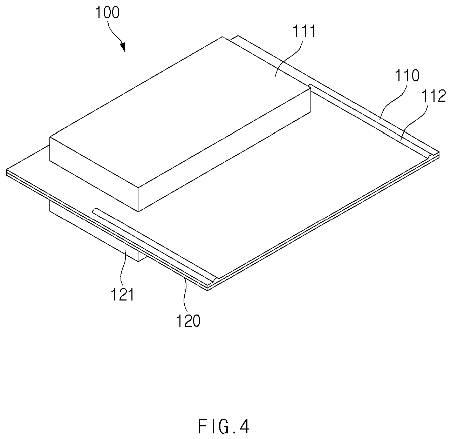

That is, as illustrated in FIG. 4, the pouch 100 for the secondary battery according to the first embodiment of the present invention has a structure, in which the one pouch 110 and the other pouch 120 symmetrically overlap each other with respect to the boundary line 130.

Here, one accommodation groove 111 and the other accommodation groove 121 are formed in one surface of the one pouch 110 (a right surface of the one pouch when viewed in FIG. 2) and one surface of the other pouch 120 (a left surface of the other pouch as viewed in FIG. 2), which are disposed close to the boundary line 130, respectively. That is, one accommodation groove 111 for accommodating one end of the electrode assembly is formed in one surface of the one pouch 110, and the other accommodation groove 121 for accommodating the other end of the electrode assembly is formed in one surface of the other pouch 120.

As an example, referring to FIG. 4, it has a structure in which one pouch 110 and the other pouch 120 are disposed in a vertical direction with respect to the boundary line 130. Here, one accommodation groove 111 and the other side accommodation groove 121 are connected in a vertical direction to form an accommodation part for accommodating the electrode assembly.

Also, a gas pocket region for forming a gas pocket part that collects a gas is defined in each of the other surface (left surface of the one pouch when viewed in FIG. 2) of the one pouch 110 disposed far from the boundary line 130 and the other surface (right surface of the other pouch when viewed in FIG. 2) of the other pouch 120.

The pouch 100 for the secondary battery forms one surface of the pouch 110 on one surface of the other pouch 120 to mold one accommodation groove 111 and the other accommodation groove 121. Here, since stress occurring when the accommodation grooves are formed remains in the other surface of the one pouch 110 and the other surface of the other pouch 120, there is a problem in which a curl phenomenon such as being curled or bent in the direction of the accommodation grooves occurs.

In order to solve the above problem, the pouch 100 for the secondary battery according to the first embodiment of the present invention comprises one reinforcing part 112 and the other reinforcing part 122, which reinforce strength, on the other surface of the one pouch 110 and the other surface of the other pouch 120.

That is, one reinforcing part 112 for reinforcing strength is formed on the other surface of the one pouch 110. Thus, the one reinforcing part 112 may reinforce the strength so that the other surface of the one pouch 110 is not curled or bent in the direction of the one accommodation groove 111, and as a result, the curl phenomenon may be prevented from occurring.

In addition, the other reinforcing part 122 for reinforcing strength is formed on the other surface of the other pouch 120. Thus, the other reinforcing part 122 may reinforce the strength so that the other surface of the other pouch 120 is not curled or bent in the direction of the other accommodation groove 121, and as a result, the curl phenomenon may be prevented from occurring.

The one reinforcing part 112 may be formed symmetrically on both sides of the other surface of the one pouch 110 in a y-axis direction illustrated in FIG. 1, and thus, the curl phenomenon may be prevented from occurring on both sides of the other surface of the one pouch 110. In addition, the other reinforcing part 122 may be formed symmetrically on both sides of the other surface of the other pouch 120 in the y-axis direction illustrated in FIG. 1, and thus, the curl phenomenon may be prevented from occurring on both sides of the other surface of the other pouch 120. That is, the one reinforcing part 112 and the other reinforcing part 122 may maintain the other surface of the one pouch and the other surface of the other pouch in a flat state.

Both ends of the one reinforcing part 112 and the other reinforcing part 122 may extend lengthily in a longitudinal direction of the pouch 100, and thus, the curl phenomenon, in which the other surface of the one pouch 110 and the other surface of the other pouch are curled or bent in the direction of the accommodation grooves may be effectively prevented from occurring.

In other words, the one reinforcing part 112 and the other reinforcing part 122 may be formed linearly along the longitudinal direction of the pouch.

The one reinforcing part and the other reinforcing part may be formed by forming each of the surfaces of the one pouch and the other pouch in an embossed form.

When the pouch is viewed in the width direction (viewed in the y-direction illustrated in FIG. 1), one end of the one reinforcing part 112 extends in a straight line to overlap the one accommodation groove 111 by a set length, and the other end extends to match an end of the other surface of the one pouch. Thus, it is possible to reinforce the strength between the one surface and the other surface of the one pouch, and as a result, it is possible to prevent the curl phenomenon from occurring between the one surface and the other surface of the one pouch.

When the pouch is viewed in the width direction (viewed in the y-direction illustrated in FIG. 1), one end of the other reinforcing part 122 extends in a straight line to overlap the other accommodation groove 121 by a set length, and the other end extends to match an end of the other surface of the other pouch. Thus, it is possible to reinforce the strength between the one surface and the other surface of the other pouch, and as a result, it is possible to prevent the curl phenomenon from occurring between the one surface and the other surface of the other pouch.

The pouch 100 for the secondary battery according to the first embodiment of the present invention having the structure as described above may prevent the curl phenomenon from occurring on the other surface of the pouch even though the one surface of the pouch is formed to mold the one accommodation groove and the other accommodation groove.

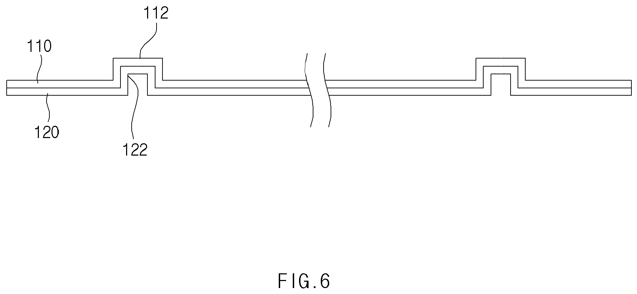

In the pouch 100 for the secondary battery according to the first embodiment of the present invention, the one reinforcing part 112 is formed to protrude in one direction (direction of a bottom surface of the pouch when viewed in FIG. 1) of the pouch 100, and the other reinforcing part 122 may be formed to protrude in the other direction (direction of a top surface of the pouch when viewed in FIG. 1) of the pouch 100, which is a direction opposite to the one reinforcing part. Thus, when the one pouch 110 and the other pouch 120 overlap each other, the one accommodation groove 111 of the one pouch 110 and the other accommodation groove 121 of the other pouch 120 are connected to each other to form an electrode assembly accommodation part. A groove portion (a bottom surface portion of the one reinforcing part as viewed in FIG. 6) of the one reinforcing part 112 of the one pouch 110 is fitted into and coupled to a protrusion portion (a top surface portion of the other reinforcing part when viewed in FIG. 6) of the other reinforcing part 122 of the other pouch 120. Thus, the one pouch 110 and the other pouch 120 may be folded to overlap each other without a separate equipment.

Hereinafter, a method for manufacturing the pouch for the secondary battery according to the first embodiment of the present invention will be described.

### [Method for manufacturing pouch for secondary battery according to first embodiment of the present invention]

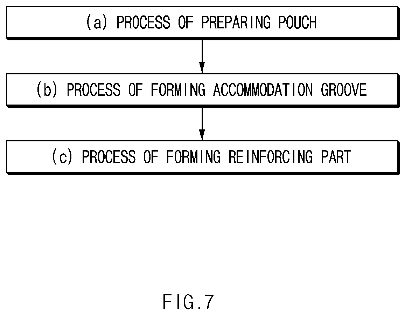

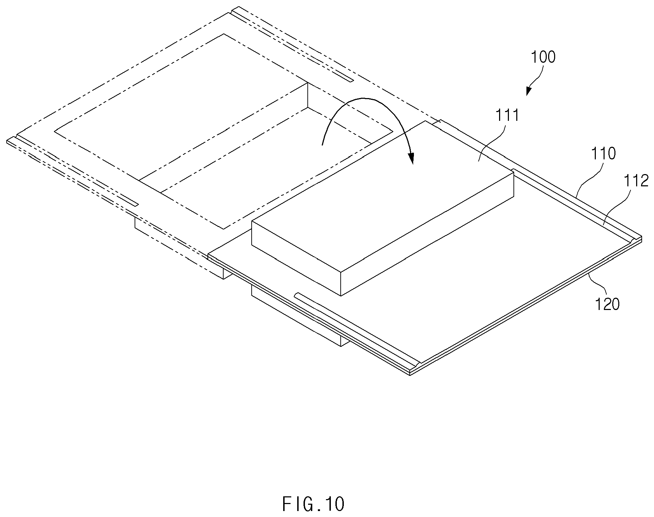

As illustrated in FIGS. 7 to 10, a method for manufacturing a pouch for a secondary battery according to the first embodiment of the present invention comprises a process (a) of preparing a pouch sheet, a process (b) of forming an accommodation groove, and a process (c) of forming a reinforcing part.

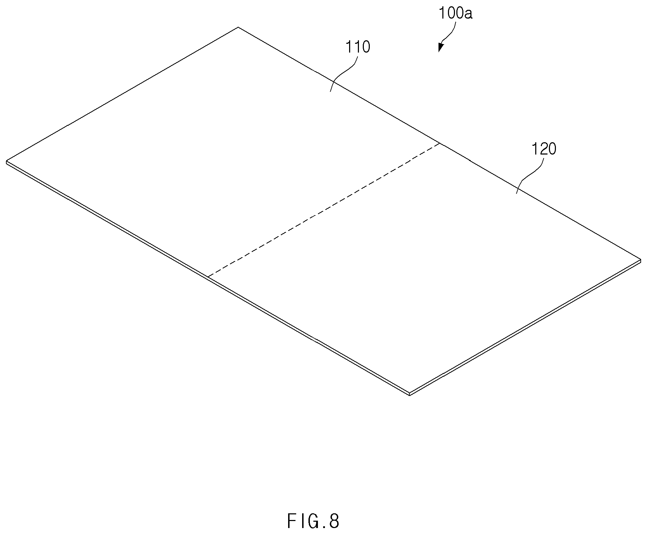

In the process (a) of preparing the pouch sheet, a pouch sheet 100a in which one pouch 110 and the other pouch 120 are formed to correspond to each other in a longitudinal direction is prepared. That is, referring to FIG. 8, in the pouch sheet 100a, the one pouch 110 is provided at a left side with respect to a central boundary line 130, and the other pouch 120 is provided at a right side with respect to the central boundary line 130.

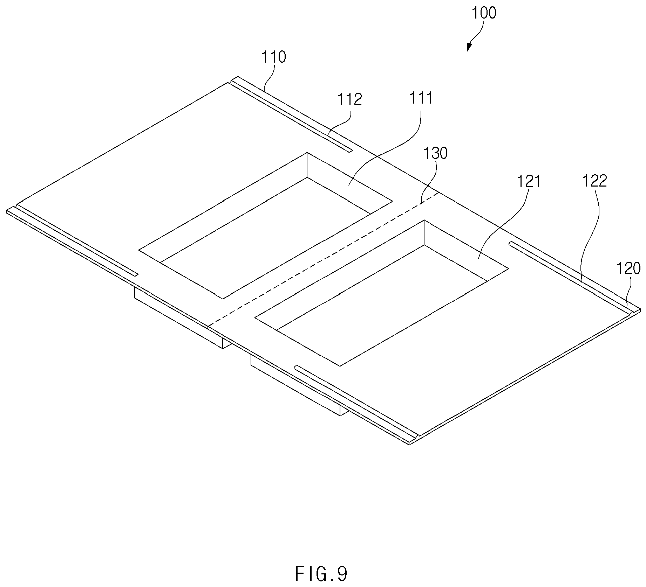

In the process (b) of forming the accommodation groove, one surface (left surface close to the boundary line 130 when viewed in FIG. 9) of the one pouch 110 and one surface (right surface close to the boundary line 130 when viewed in FIG. 9) of the other pouch 120, which correspond to each other, are formed to form the one accommodation groove 111 and the other accommodation groove 121. That is, one accommodation groove 111 is formed in one surface of the one pouch 110, and the other accommodation groove 121 is formed in one side of the other pouch 120.

In the process (c) of forming the reinforcing part, one reinforcing part 112 and the other reinforcing part 122 are formed on the other surface (right surface of the one pouch when viewed in FIG. 9) of the one pouch 110 and the other surface (left surface of the other pouch when viewed in FIG. 9) of the other pouch 120, respectively.

That is, the one reinforcing part 112 is formed on the other surface of the one pouch 110, and the other reinforcing part 122 is formed on the other surface of the other pouch 120.

Thus, the one reinforcing part 112 and the other reinforcing part 122 may reinforce the strength of the other surface of the one pouch 110 and the other surface of the other pouch 120, and accordingly, the curl phenomenon in which the other surface of the one pouch 110 and the other surface of the other pouch 120 are curled or bent in the direction of the one accommodation groove 111 and the other accommodation groove 121 may be prevented from occurring.

In the process (c), the one reinforcing part 112 may be formed symmetrically on both sides of the other surface of the one pouch 110. Here, both ends of the one reinforcing part 112 may extend lengthily in the longitudinal direction of the pouch sheet 100a to significantly reinforce the strength so that the other surface of the one pouch 110 is not curled or bent in the direction of the one accommodation groove 111.

In the process (c), one end of the one reinforcing part 112 extends in a straight line to partially overlap the one accommodation groove 111 when the one pouch is viewed from a side surface (that is, when viewed in the y-direction illustrated in FIG. 1), and the other end extends in a straight line up to an end of the one pouch. Thus, it is possible to reinforce the strength between the one surface and the other surface of the one pouch.

In addition, in the process (c), the other reinforcing part 122 may be formed symmetrically on both sides of the other surface of the other pouch 120. Here, both ends of the other reinforcing part 122 may extend lengthily in the longitudinal direction of the pouch sheet 100a to significantly reinforce the strength so that the other surface of the other pouch 120 is not curled or bent in the direction of the other accommodation groove 121.

One end of the other reinforcing part 122 extends in a straight line to partially overlap the other accommodation groove 121 when the one pouch is viewed from a side surface (that is, when viewed in the y-direction illustrated in FIG. 1), and the other end extends in a straight line up to an end of the pouch. Thus, it is possible to significantly reinforce the strength between the one surface and the other surface of the other pouch.

Particularly, the process (b) and the process (c) may be performed at the same time. That is, one surface of the one pouch 110 and one surface of the other pouch 120 are formed to form the one accommodation groove 111 and the other side accommodation groove 121, and simultaneously, the one reinforcing part 112 and the other reinforcing part 122 are formed on the other surface of the one pouch 110 and the other surface of the other pouch 120. Thus, it is possible to prevent the other surface of the pouch from being curled or bent when the accommodation groove is formed in one surface of the pouch.

In the process (c), the one reinforcing part 112 or the other reinforcing part 122 is formed by forming the other surface of the one pouch 110 or the other surface of the other pouch 120 in an embossed form to improve easiness of the operation.

The one reinforcing part 112 is be formed to protrude in one direction of the pouch sheet 100a, and the other reinforcing part 122 is be formed to protrude in the other direction of the pouch sheet, which is a direction opposite to the one reinforcing part. That is, the one reinforcing part 112 and the other reinforcing part 122 are formed to protrude in the directions opposite to each other. Here, the one reinforcing part 112 and the other reinforcing part 122, which protrude in opposite directions are fitted to be coupled to each other when the one pouch and the other pouch overlap each other, thereby improving bondability between the one pouch and the other pouch.

After the process (c), a process (d) of folding the pouch is further performed.

In the process (d), the one pouch 110 and the other pouch 120 are folded to overlap each other with respect to the boundary line 130, thereby completing the pouch 100.

That is, the process (d) comprises a process of bending the pouch sheet 100a so that the one pouch 110 and the other pouch 120 are disposed to correspond to each other, a process of coupling a groove portion (i.e., a space in a bottom surface of the one reinforcing part) of the one reinforcing part 112 to a protrusion portion (i.e., a protrusion surface of a top surface of the other reinforcing part) of the other reinforcing part 122 so that an end of the one pouch 110 and an end of the other pouch 120 match each other, and a process of folding the one pouch 110 and the other pouch 120 with respect to the boundary line 130 between the one pouch 110 and the other pouch 120 so that the one pouch 110 and the other pouch 120 are disposed to correspond to each other.

Thus, the one accommodation groove and the other accommodation groove overlap one surface of the pouch to from the accommodation part, and the other surface of the one pouch and the other surface of the other pouch overlap the other surface to form the gas pocket part.

When the above processes are completed, the pouch 100 for the secondary battery of the present application may be manufactured.

Hereinafter, in descriptions of another embodiment of the present invention, constituents having the same function as the above-mentioned embodiment have been given the same reference numeral in the drawings, and thus duplicated description will be omitted.

### [Method for manufacturing secondary battery according to second embodiment of the present invention]

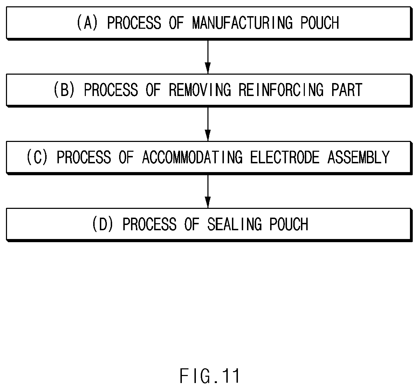

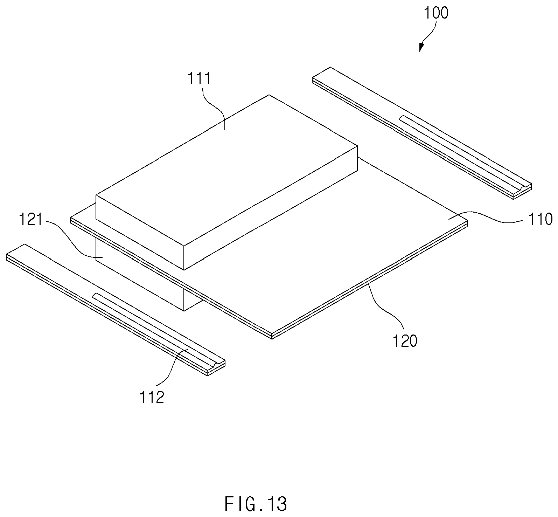

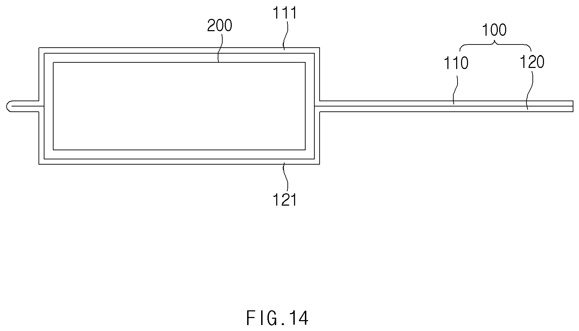

As illustrated in FIGS. 11 to 15, a method for manufacturing a secondary battery according to a second embodiment of the present invention comprises a process (A) of manufacturing a pouch, a process (B) of removing a reinforcing part, a process (C) of accommodating an electrode assembly, and a process (D) of sealing the pouch.

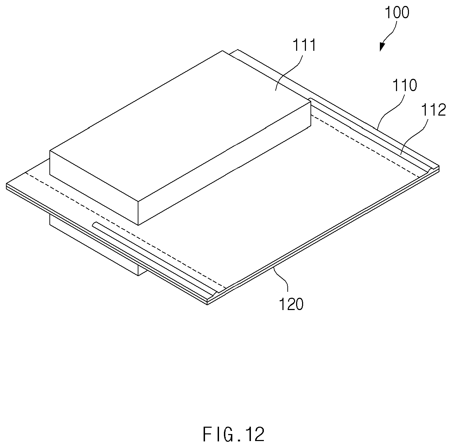

In the process (A), referring to FIG. 12, a pouch 100 in which one pouch 110 and the other pouch 120 are formed with respect to a boundary line 130 is manufactured.

The method for manufacturing the pouch is the same as the method of manufacturing the method for manufacturing the pouch according to the first embodiment described above, and accordingly, duplicated descriptions will be omitted.

In the process (B), the one reinforcing part 112 and the other reinforcing part 122, which are formed on the pouch 100 are cut and removed. That is, it is cut along a dotted line illustrated in FIG. 12. As a result, the one reinforcing part 112 and the other reinforcing part 122 may be removed from the pouch. The pouch may become a region for forming an accommodation part accommodating an electrode assembly by connecting one accommodation groove of one pouch to the other accommodation groove of the other pouch and may become a region for forming a gas pocket part by connecting the other surface of the one pouch to the other surface of the other pouch.

In the process (C), the electrode assembly 200 is accommodated between the one accommodation groove 111 and the other accommodation groove 121 of the pouch.

The process (B) and the process (C) may be performed in reverse order. That is, the electrode assembly may be accommodated between the one accommodation groove and the other accommodation groove of the pouch, and then, one reinforcing part and the other reinforcing part, which are formed in the pouch, may be cut and removed.

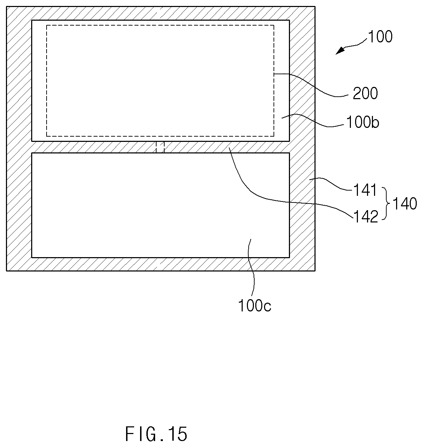

In the process (D), referring to FIG. 15, the pouch 100 is sealed to form a sealing part 140. That is, the sealing part 140 seals an edge surface of the pouch 100 to form a first sealing part 141, and simultaneously, the sealing part 140 seals a space between a region for forming the accommodation part and a region for forming the gas pocket part to form a second sealing part 142. As a result, the accommodation part 100b is formed at one side of the pouch 100, and the gas pocket part 100c is formed at the other side of the pouch 100, and as a result, the secondary battery according to the present invention is completed.

### [Description of the Symbols]

100: Pouch
110: One pouch (first pouch section)
111: One accommodation groove (first accommodation groove)
112: One reinforcing part (first reinforcing part)
120: The other pouch (second pouch section)
121: The other accommodation groove (second accommodation groove)
122: The other reinforcing part (second reinforcing part)
130: Boundary line

## Claims

1. A pouch (100) for a secondary battery, in which a first pouch section (110) and a second pouch section (120) are formed in a longitudinal direction, the pouch (100) comprising:
a first accommodation groove (111) and a second accommodation groove (121), which are formed in one surface of the first pouch section (110) and one surface of the second pouch section (120), which correspond to each other, respectively;
a first reinforcing part (112) formed on the other surface of the first pouch section (110); and
a second reinforcing part (122) formed on the other surface of the second pouch section (120), wherein the first reinforcing part (112) is formed to protrude in one direction of the first pouch section (110), and the second reinforcing part (122) is formed to protrude in the other direction of the second pouch section (120), which is a direction opposite to the first reinforcing part (112), and
when the first pouch section (110) and the second pouch section (120) overlap each other, a groove portion of the first reinforcing part (112) is fitted to be coupled to a protrusion portion of the second reinforcing part (122)
wherein a boundary line (130) is arranged between the first pouch section (110) and the second pouch section (120), wherein the one surface of the first pouch section (110) and the one surface of the second pouch section (120) are disposed close to the boundary line (130) and wherein each of the other surfaces is disposed far from the boundary line (130).

2. The pouch (100) of claim 1, wherein the first reinforcing part (112) is formed at each of both sides of the other surface of the first pouch section (110), and
the second reinforcing part (122) is formed at each of both sides of the other surface of the second pouch section (120).

3. The pouch (100) of claim 2, wherein both ends of the first reinforcing part (112) extend longitudinally in the longitudinal direction of the pouch (100).

4. The pouch (100) of claim 3, wherein, when the pouch (100) is viewed in a width direction, one end of the one reinforcing part (112) of the first pouch section (110) is provided to overlap the first accommodation groove (111) by a set length.

5. The pouch (100) of claim 2, wherein both ends of the second reinforcing part (122) extend longitudinally in the longitudinal direction of the pouch (100).

6. The pouch (100) of claim 5, wherein, when the pouch (100) is viewed in a width direction, one end of the second reinforcing part (122) of the second pouch section (120) is provided to overlap the second accommodation groove (121) by a set length.

7. A method for manufacturing a pouch (100) for a secondary battery, the method comprising:
a process (a) of preparing a pouch sheet (100a) in which a first pouch section (110) and a second pouch section (120) are formed to correspond to each other in a longitudinal direction;
a process (b) of forming a first accommodation groove (111) and the second accommodation groove (121) in one surface of the first pouch section (110) and one surface of the second pouch section (120), which correspond to each other, respectively; and
a process (c) of forming a first reinforcing part (112) on the other surface of the first pouch section (110), and forming the second reinforcing part (122) on the other surface of the second pouch section (120),
wherein, in the process (c), the first reinforcing part (112) or the second reinforcing part (122) are formed by forming the other surface of the first pouch section (110) or the other surface of the second pouch section (120) in an embossed form,
wherein, in the process (c), the first reinforcing part (112) is formed to protrude in first direction of the pouch sheet (100a), and the second reinforcing part (122) is formed to protrude in the other direction of the pouch sheet (100a), which is a direction opposite to the first reinforcing part (112),
further comprising, after the process (c), a process (d) which comprises a process of bending the pouch sheet (100a) so that the first pouch section (110) and the second pouch section (120) are disposed to correspond to each other, a process of coupling a groove portion of the first reinforcing part (112) to a protrusion portion of the second reinforcing part (122) so that an end of the first pouch section (110) and an end of the second pouch section (120) match each other, and a process of folding a boundary line (130) between the first pouch section (110) and the second pouch section (120) so that the first pouch section (110) and the second pouch section (120) overlap each other so as to complete the pouch (100),
wherein the boundary line (130) is arranged between the first pouch section (110) and the second pouch section (120), wherein the one surface of the first pouch section (110) and the one surface of the second pouch section (120) are disposed close to the boundary line (130) and wherein each of the other surfaces is disposed far from the boundary line (130).

8. The method of claim 7, wherein, in the process (c), the first reinforcing part (112) is formed at each of both sides of the other surface of the first pouch section (110), and both ends of the first reinforcing part (112) extend longitudinally in the longitudinal direction of the pouch sheet (100a).

9. The method of claim 7, wherein, in the process (c), the second reinforcing part (122) is formed at each of both sides of the other surface of the second pouch section (120), and both ends of the second reinforcing part (122) extend longitudinally in the longitudinal direction of the pouch sheet (100a).

10. The method of claim 7, wherein the process (b) and the process (c) are performed at the same time.

11. A method for manufacturing a secondary battery, the method comprising:
a process (A) of manufacturing a pouch (100) through the method of claim 7;
a process (B) of cutting and removing the first reinforcing part (112) and the second reinforcing part (122), which are formed on the pouch (100);
a process (C) of accommodating an electrode assembly between the first accommodation groove (111) and the second accommodation groove (121) of the pouch (100); and
a process (D) of sealing an edge surface of the pouch (100) to complete the secondary battery.

## Patentansprüche

1. Pouch (100) für eine Sekundärbatterie, in der in einer Längsrichtung ein erster Pouchabschnitt (110) und ein zweiter Pouchabschnitt (120) ausgebildet sind, wobei der Pouch (100) umfasst:
eine erste Aufnahmenut (111) und eine zweite Aufnahmenut (121), die in einer Oberfläche des ersten Pouchabschnitts (110) und einer Oberfläche des zweiten Pouchabschnitts (120) ausgebildet sind, die einander entsprechen,
ein erstes Verstärkungsteil (112), das an der anderen Oberfläche des ersten Pouchabschnitts (110) ausgebildet ist; und
ein zweites Verstärkungsteil (122), das auf der anderen Oberfläche des zweiten Pouchabschnitts (120) ausgebildet ist, wobei das erste Verstärkungsteil (112) so ausgebildet ist, dass es in einer Richtung des ersten Pouchabschnitts (110) vorsteht, und das zweite Verstärkungsteil (122) so ausgebildet ist, dass es in der anderen Richtung des zweiten Pouchabschnitts (120) vorsteht, die eine dem ersten Verstärkungsteil (112) entgegengesetzte Richtung ist, und
wenn der erste Pouchabschnitt (110) und der zweite Pouchabschnitt (120) einander überlappen, ein Nutabschnitt des ersten Verstärkungsteils (112) zum Koppeln mit einem Vorsprungsabschnitt des zweiten Verstärkungsteils (122) gepasst ist,
wobei eine Grenzlinie (130) zwischen dem ersten Pouchabschnitt (110) und dem zweiten Pouchabschnitt (120) angeordnet ist, wobei die eine Oberfläche des ersten Pouchabschnitts (110) und die eine Oberfläche des zweiten Pouchabschnitts (120) nahe an der Grenzlinie (130) angeordnet sind und wobei jede der anderen Oberflächen fern von der Grenzlinie (130) angeordnet ist.

2. Pouch (100) nach Anspruch 1, wobei das erste Verstärkungsteil (112) an jeder der beiden Seiten der anderen Oberfläche des ersten Pouchabschnitts (110) ausgebildet ist, und
das zweite Verstärkungsteil (122) an jeder der beiden Seiten der anderen Oberfläche des zweiten Pouchabschnitts (120) ausgebildet ist.

3. Pouch (100) nach Anspruch 2, wobei sich beide Enden des ersten Verstärkungsteils (112) in Längsrichtung des Pouchs (100) erstrecken.

4. Pouch (100) nach Anspruch 3, wobei, wenn der Pouch (100) in einer Breitenrichtung betrachtet wird, ein Ende des einen Verstärkungsteils (112) des ersten Pouchabschnitts (110) dergestalt vorgesehen ist, dass es die erste Aufnahmenut (111) um eine festgelegte Länge überlappt.

5. Pouch (100) nach Anspruch 2, wobei sich beide Enden des zweiten Verstärkungsteils (122) in Längsrichtung des Pouchs (100) erstrecken.

6. Pouch (100) nach Anspruch 5, wobei bei Betrachtung des Pouchs (100) in Breitenrichtung ein Ende des zweiten Verstärkungsteils (122) des zweiten Pouchabschnitts (120) dergestalt vorgesehen ist, dass es die zweite Aufnahmenut (121) um eine bestimmte Länge überlappt.

7. Verfahren zur Herstellung eines Pouch (100) für eine Sekundärbatterie, wobei das Verfahren umfasst:
ein Prozess (a) zum Herstellen einer Pouch-Folie (100a), in der ein erster Pouchabschnitt (110) und ein zweiter Pouchabschnitt (120) so ausgebildet sind, dass sie einander in einer Längsrichtung entsprechen;
ein Prozess (b) zum Bilden einer ersten Aufnahmenut (111) und der zweiten Aufnahmenut (121) in einer Oberfläche des ersten Pouchabschnitts (110) und einer Oberfläche des zweiten Pouchabschnitts (120), die einander entsprechen; und
ein Prozess (c) zum Ausbilden eines ersten Verstärkungsteils (112) an der anderen Oberfläche des ersten Pouchabschnitts (110) und zum Ausbilden des zweiten Verstärkungsteils (122) an der anderen Oberfläche des zweiten Pouchabschnitts (120),
wobei bei dem Prozess (c) das erste Verstärkungsteil (112) oder das zweite Verstärkungsteil (122) durch Ausbilden der anderen Oberfläche des ersten Pouchabschnitts (110) oder der anderen Oberfläche des zweiten Pouchabschnitts (120) durch Prägen ausgebildet wird,
wobei in dem Prozess (c) das erste Verstärkungsteil (112) so geformt wird, dass es in einer ersten Richtung der Pouch-Folie (100a) vorsteht, und das zweite Verstärkungsteil (122) so geformt wird, dass es in der anderen Richtung der Pouch-Folie (100a) vorsteht, die eine Richtung entgegengesetzt zu dem ersten Verstärkungsteil (112) ist,
ferner umfassend, nach dem Prozess (c), einen Prozess (d), der einen Prozess des Biegens der Pouch-Folie (100a) umfasst, so dass der erste Pouchabschnitt (110) und der zweite Pouchabschnitt (120) dergestalt angeordnet werden, dass sie einander entsprechen, einen Prozess des Koppelns eines Nutabschnitts des ersten Verstärkungsteils (112) mit einem Vorsprungsabschnitt des zweiten Verstärkungsteils (122), so dass ein Ende des ersten Pouchabschnitts (110) und ein Ende des zweiten Pouchabschnitts (120) einander entsprechen, und ein Verfahren zum Falten einer Grenzlinie (130) zwischen dem ersten Pouchabschnitt (110) und dem zweiten Pouchabschnitt (120), so dass der erste Pouchabschnitt (110) und der zweite Pouchabschnitt (120) einander überlappen, um den Pouch (100) zu vervollständigen,
wobei die Grenzlinie (130) zwischen dem ersten Pouchabschnitt (110) und dem zweiten Pouchabschnitt (120) angeordnet ist, wobei die eine Oberfläche des ersten Pouchabschnitts (110) und die eine Oberfläche des zweiten Pouchabschnitts (120) nahe an der Grenzlinie (130) angeordnet sind und wobei jede der anderen Oberflächen fern von der Grenzlinie (130) angeordnet ist.

8. Verfahren nach Anspruch 7, wobei in dem Prozess (c) das erste Verstärkungsteil (112) an jeder der beiden Seiten der anderen Oberfläche des ersten Pouchabschnitts (110) gebildet wird und beide Enden des ersten Verstärkungsteils (112) sich in Längsrichtung in der Längsrichtung der Pouch-Folie (100a) erstrecken.

9. Verfahren nach Anspruch 7, wobei in dem Prozess (c) das zweite Verstärkungsteil (122) an jeder der beiden Seiten der anderen Oberfläche des zweiten Pouchabschnitts (120) gebildet wird und beide Enden des zweiten Verstärkungsteils (122) sich in Längsrichtung in der Längsrichtung der Pouch-Folie (100a) erstrecken.

10. Verfahren nach Anspruch 7, wobei der Prozess (b) und der Prozess (c) zur gleichen Zeit durchgeführt werden.

11. Verfahren zur Herstellung einer Sekundärbatterie, wobei das Verfahren umfasst:
ein Prozess (A) zum Herstellen eines Pouchs (100) durch das Verfahren nach Anspruch 7;
ein Prozess (B) zum Schneiden und Entfernen des ersten Verstärkungsteils (112) und des zweiten Verstärkungsteils (122), die an dem Pouch (100) ausgebildet sind;
ein Prozess (C) zum Aufnehmen einer Elektrodenanordnung zwischen der ersten Aufnahmenut (111) und der zweiten Aufnahmenut (121) des Pouchs (100); und
ein Prozess (D) zum Versiegeln einer Randfläche des Pouchs (100), um die Sekundärbatterie zu vervollständigen.

## Revendications

1. Poche (100) pour une batterie secondaire, dans laquelle une première section de poche (110) et une seconde section de poche (120) sont formées dans le sens longitudinal, la poche (100) comprenant :
une première rainure de réception (111) et une deuxième rainure de réception (121), formées sur une surface de la première section de poche (110) et une surface de la deuxième section de poche (120), correspondant entre elles, respectivement;
une première partie de renfort (112) formée sur l'autre surface de la première section de poche (110) ; et
une deuxième partie de renfort (122) formée sur l'autre surface de la deuxième section de poche (120), la première partie de renfort (112) étant formée pour faire saillie dans une direction de la première section de la poche (110), et la deuxième partie de renfort (122) étant formée pour faire saillie dans l'autre direction de la deuxième section de poche (120), à savoir une direction opposée à la première partie de renfort (112), et
lorsque la première section de poche (110) et la deuxième section de poche (120) se chevauchent, une partie de rainure de la première partie de renfort (112) est montée pour être couplée à une partie saillante de la deuxième partie de renfort (122)
une ligne de démarcation (130) étant agencée entre la première section de poche (110) et la deuxième section de poche (120), l'une surface de la première section de poche (110) et l'une surface de la deuxième section de poche (120) étant disposées à proximité de la ligne de démarcation (130) et chacune des autres surfaces étant disposée loin de la ligne de démarcation (130).

2. Poche (100) de la revendication 1, la première partie de renfort (112) étant formée de chacun des deux côtés de l'autre surface de la première section de poche (110), et
la deuxième partie de renfort (122) étant formée de chacun des deux côtés de l'autre surface de la deuxième section de poche (120).

3. Poche (100) de la revendication 2, les deux bouts de la première partie de renfort (112) s'étendant longitudinalement dans le sens longitudinal de la poche (100).

4. Poche (100) selon la revendication 3, dans laquelle, lorsque la poche (100) est vue dans le sens de la largeur, un bout de la partie de renfort (112) de la première section de poche (110) est agencée pour chevaucher la première rainure de réception (111) d'une longueur fixe.

5. Poche (100) selon la revendication 2, deux bouts de la deuxième partie de renfort (122) s'étendant longitudinalement dans le sens longitudinal de la poche (100).

6. Poche (100) selon la revendication 5, dans laquelle, lorsque la poche (100) est vue dans le sens de la largeur, un bout de la deuxième partie de renfort (122) de la deuxième section de poche (120) est agencé pour chevaucher la deuxième rainure de réception (121) d'une longueur fixe.

7. Procédé de fabrication d'une poche (100) pour une batterie secondaire, le procédé comprenant :
un processus (a) de préparation d'une feuille de poche (100a) dans lequel une première section de poche (110) et une deuxième section de poche (120) sont formées de façon à correspondre entre elles dans le sens longitudinal ;
un processus (b) de formation d'une première rainure de réception (111) et la deuxième rainure de réception (121) sur une surface de la première section de poche (110) et une surface de la deuxième section de poche (120), correspondant entre elles, respectivement ; et
un processus (c) de formation d'une première partie de renfort (112) sur l'autre surface de la première section de poche (110), et de formation de la deuxième partie de renfort (122) sur l'autre surface de la deuxième section de poche (120),
dans lequel, dans le procédé (c), la première partie de renfort (112) ou la deuxième partie de renfort (122) sont formées en formant l'autre surface de la première section de la poche (110) ou l'autre surface de la deuxième section de la poche (120) sous une forme emboutie,
dans lequel, dans le procédé (c), la première partie de renfort (112) est formée pour faire saillie dans la première direction de la feuille de poche (100a), et la deuxième partie de renfort (122) est formée pour faire saillie dans l'autre direction de la feuille de poche (100a), à savoir une direction opposée à la première partie de renfort (112),
comprenant en outre, après le processus (c), un processus (d) comprenant un processus de pliage de la feuille de poche (100a) de sorte que la première section de poche (110) et la deuxième section de poche (120) soient disposées pour correspondre l'une à l'autre, un procédé de couplage d'une partie rainurée de la première partie de renfort (112) à une partie saillante de la deuxième partie de renfort (122) de sorte qu'un bout de la première section de poche (110) et un bout de la deuxième section de poche (120) correspondent entre eux, et un processus de pliage d'une ligne de démarcation (130) entre la première section de poche (110) et la deuxième section de poche (120) de sorte que la première section de poche (110) et la deuxième section de poche (120) se chevauchent pour achever la poche (100),
la ligne de démarcation (130) étant agencée entre la première section de poche (110) et la deuxième section de poche (120), l'une surface de la première section de poche (110) et l'une surface de la deuxième section de poche (120) étant disposées à proximité de la ligne de démarcation (130) et chacune des autres surfaces étant disposée loin de la ligne de démarcation (130).

8. Procédé selon la revendication 7, dans lequel, dans le processus (c), la première partie de renfort (112) est formée sur chacun de deux côtés de l'autre surface de la première section de la poche (110), et les deux bouts de la première partie de renfort (112) s'étendent longitudinalement dans le sens longitudinal de la feuille de poche (100a).

9. Procédé selon la revendication 7, dans lequel, dans le processus (c), la deuxième partie de renfort (122) est formée sur chacun des deux côtés de l'autre surface de la deuxième section de la poche (120), et les deux bouts de la deuxième partie de renfort (122) s'étendent longitudinalement dans le sens longitudinal de la feuille de poche (100a).

10. Procédé selon la revendication 7, le processus (b) et le processus (c) étant effectués simultanément.

11. Procédé de fabrication d'une batterie secondaire, le procédé comprenant :
un processus (A) de fabrication d'une poche (100) selon le procédé de la revendication 7 ;
un processus (B) de coupe et dépose de la première partie de renfort (112) et de la deuxième partie de renfort (122), formées sur la poche (100) ;
un processus (C) de réception d'un ensemble d'électrodes entre la première rainure de réception (111) et la deuxième rainure de réception (121) de la poche (100) ; et
un processus (D) de scellement d'une surface marginale de la poche (100) pour achever la batterie secondaire.
